# EUROPEAN PATENT APPLICATION

(11) **EP 2 527 422 A1**
(43) Date of publication of application: **28.11.2012**
(21) Application number: 10843948.0
(22) Date of filing: 01.12.2010
(51) Int. Cl.: C12M 1/26, C12M 1/34, C12Q 1/06, C12Q 1/24, G01N 1/02, G01N 1/04

(54) **APPARATUS FOR TRAPPING FLOATING BACTERIAL CELLS, METHOD FOR COUNTING FLOATING BACTERIAL CELLS, AND SYSTEM FOR COUNTING FLOATING BACTERIAL CELLS**

(30) Priority: 19.01.2010 JP 2010009507
(71) Applicant: Hitachi Plant Technologies, Ltd., Tokyo 170-8466 (JP)
(72) Inventor: MIYASHITA, Noe, Tokyo 170-8466 (JP); KAMITANI, Matsuo, Tokyo 170-8466 (JP); GOTODA, Ryusuke, Tokyo 170-8466 (JP)
(74) Representative: Beetz & Partner
(86) International application number: PCT/JP2010/071432
(87) International publication number: WO 2011/089784

(57) **Abstract**

A floating bacteria counting device capable of trapping floating bacteria in air continuously for a long time without decreasing trapping efficiency even if the time before a trapping carrier being replaced is prolonged and a floating bacteria counting method and a floating bacteria counting system using the floating bacteria trapping device are provided. A nozzle (16) is formed of a plurality of pinholes (16a) arranged at equal intervals. If a pitch interval between the pinholes (16a) is d, a driving mechanism (22) causes a support container (20) supporting a trapping carrier (30) to move in a horizontal direction so that the support container (20) draws a circle of less than d in diameter.

## Description

### Technical Field

The present invention relates to a floating bacteria trapping device, a floating bacteria counting method, and a floating bacteria counting system, and in particular, relates to a floating bacteria trapping device used to trap floating bacteria floating in the air continuously for a long time and count living organisms in the air, a floating bacteria counting method, and a floating bacteria counting system.

### Background Art

As counting techniques of airborne microbes (floating bacteria) in the drug manufacture field, hospitals/operating rooms, food processing field and the like, in general, the light scattering method using a particle counter (particle counting device) that detects scattered light emitted from particles in a sample after the sample being irradiated with light and the culture method that counts colonies after culturing bacteria in an agar plate culture medium using an incubator or the like for two to three days by blowing a room air on the culture medium are frequently used.

Though the light scattering method using a particle counter can make a real-time count in terms of its function, dust and dirt of non-biological origin, in addition to particles of biological origin, are counted simultaneously and the exact number of living organisms cannot be identified.

According to the culture method, it takes time before living organisms are detected because the number of colonies cultured for two to three days by using an incubator or the like is counted and also a problem that bacteria that cannot be cultured (non-culturable bacteria) and bacteria that are damaged or cannot grow due to bad environment conditions (bacteria in a germination state), that is, VNC (Viable but Non-Culturable) bacteria cannot be counted is posed.

Recently, a counting device combining microbial count by spectrophotofluorimetry and the particle counting method based on the MIE scattering theory is developed. However, spectrophotofluorimetry detects NADH (nicotinamide adenine dinucleotide) of biological origin and so detects living organisms and dead organisms simultaneously, posing a problem that living organisms and dead organisms cannot be distinguished. As a result, if floating bacteria are detected (counted) by the present device in a room an isolator or the like that guarantees a germ-free environment, it becomes necessary to interrupt work in the room to analyze and sterilize the isolator or the like, but if counted bacteria are dead organisms, the above analysis and sterilization work will be useless, leading to lower work efficiency.

The impact trapping method using the principle of impact is known as a trapping method of floating bacteria. The impact trapping method is a method of trapping floating bacteria on a carrier surface by causing a high-speed impact of air after having been caused to pass through a slit or pinhole forming a nozzle on the trapping carrier and, as shown in Patent Literatures 1 and 2, a method of increasing trapping efficiency by optimizing the nozzle diameter, a gap between the nozzle and a trapping surface, the nozzle pitch and the like and, as shown in Patent Literature 3, a method of trapping floating bacteria uniformly on a trapping carrier by rotating and moving up and down a container in which the trapping carrier is placed have been proposed.

### Citation List

### Patent Literature

Patent Literature 1: Japanese Patent No. 642687
Patent Literature 2: Japanese Patent Application Laid-Open No. 2001-169770
Patent Literature 3: Japanese Patent Application Laid-Open No. 09-215491

### Summary of Invention

### Technical Problem

Floating bacteria caught by the above impact trapping method are generally assumed to be counted by the culture method and thus, the trapping carrier is formed of an agar medium containing sufficient nutrients necessary for growth of floating bacteria. The time in which bacteria can continuously be caught is limited because the number of bacteria that can be discriminated after being caught on the agar medium is limited and the agar medium is dried during trapping operation, leading to lower trapping efficiency. Further, even if, as described in Patent Literature 3, a plate on which a culture medium is placed is rotated around the center of the plate as the rotation center, the culture medium immediately below the nozzle, that is, the culture medium on a circumference with the distance from the center of the plate to immediately below the nozzle as a radius gradually becomes recessed due to wind pressure and accordingly, the gap length between the nozzle and the trapping surface is gradually prolonged, leading to lower trapping efficiency if the trapping continues for a long time. Therefore, it is necessary to replace the culture medium every few minutes to continuously catch floating bacteria and the number of times of replacing the culture medium increases and the number of cultured samples increases in accordance with the trapping time.

The present invention is made in view of the above circumstances and an object thereof is to provide a floating bacteria trapping device capable of trapping floating bacteria in the air continuously for a long time without decreasing trapping efficiency even if the time before a trapping carrier being replaced is prolonged and a floating bacteria counting method and a floating bacteria counting system using the floating bacteria trapping device.
Another object of the present invention is to provide a floating bacteria counting method and a floating bacteria counting system capable of counting only living organism quickly and accurately.

### Solution to Problem

In order to achieve the above object, a floating bacteria trapping device according to the present invention having a nozzle allowing air the pass through, a trapping carrier provided downstream of the nozzle to catch floating bacteria in the air having passed through the nozzle, and a support container supporting the trapping carrier, includes a driving mechanism that causes the support container to move in a horizontal direction so that trajectories drawn by center points of regions on the trapping carrier against which the air having passed through the nozzle collides do not intersect.

According to the above configuration, the floating bacteria trapping device includes the driving mechanism that causes the support container to move in the horizontal direction so that trajectories drawn by center points of regions on the trapping carrier against which the air having passed through the nozzle collides do not intersect and thus, a specific portion of the trapping carrier can be prevented from being recessed due to the wind pressure or drying. Therefore, floating bacteria in the air can be caught continuously for a long time without decreasing trapping efficiency even if the time before the trapping carrier being replaced is prolonged.

In addition to the above configuration, the nozzle is formed of a plurality of pinholes arranged at equal intervals and if a pitch interval between the pinholes is d, the driving mechanism causes the support container to move in the horizontal direction so that the support container draws a circle of less than d in diameter.

If configured as described above, the air can be made to collide against nearly the entire surface of the trapping carrier without concentrating the collision of air on a specific portion of the surface of the trapping carrier and thus, nearly the entire surface of the trapping carrier can be used as the trapping surface. Therefore, recesses due to drying or the wind pressure can be prevented and floating bacteria in the air can be caught continuously for a long time without decreasing trapping efficiency even if the time before the trapping carrier being replaced is prolonged.

In addition to the above configuration, the driving mechanism causes the support container to rise in a vertical direction.
By adopting the above configuration, even if the trapping carrier immediately below the nozzle is recessed due to drying or the wind pressure during trapping operation in which the air passes through the nozzle and collides against the trapping carrier due to the flow of air caused by a fan and floating bacteria contained in the air are captured by the carrier surface, the support container rises to keep the gap length between the nozzle and the trapping surface of the carrier so that high trapping efficiency can be maintained.

In addition, according to the present invention, there is provided a floating bacteria counting method of counting living organisms trapped by a trapping carrier by causing air to collide against the trapping carrier to trap floating bacteria and analyzing the trapping carrier, wherein if floating bacteria are trapped by the trapping carrier mounted on a floating bacteria trapping device while replacing the trapping carrier mounted on the floating bacteria trapping device, the trapping carrier mounted on the floating bacteria trapping device when particles floating in the air are detected by a particle counting device that counts particles floating in the air in a room in which the floating bacteria trapping device is arranged is the trapping carrier to be analyzed.

According to the above configuration, by selecting the trapping carrier mounted on the floating bacteria trapping device when particles floating in the air are detected by the particle counting device that detects particles floating in the air in a room in which the floating bacteria trapping device is arranged as the trapping carrier to be analyzed, trapping carriers mounted on the floating bacteria trapping device in a time zone in which no particle is detected by the particle counting device can be excluded from analysis and only living organisms can be counted accurately and quickly by analyzing only trapping carriers that may have caught living organisms.

In addition, according to the present invention, there is provided a floating bacteria counting method of counting living organisms trapped by a trapping carrier by analyzing the trapping carrier mounted on a floating bacteria trapping device trapping floating bacteria in air while causing a support container supporting the trapping carrier to move in a horizontal direction so that trajectories drawn by center points of regions on the trapping carrier against which the air collides do not intersect, wherein if floating bacteria are trapped by the trapping carrier mounted on the floating bacteria trapping device while replacing the trapping carrier mounted on the floating bacteria trapping device, the trapping carrier mounted on the floating bacteria trapping device when particles floating in the air are detected by a particle counting device that counts particles floating in the air in a room in which the floating bacteria trapping device is arranged is the trapping carrier to be analyzed.

According to the above configuration, by selecting the trapping carrier mounted on the floating bacteria trapping device when particles floating in the air are detected by the particle counting device that detects particles floating in the air in a room in which the floating bacteria trapping device is arranged as the trapping carrier to be analyzed, trapping carriers mounted on the floating bacteria trapping device in a time zone in which no particle is detected by the particle counting device can be excluded from analysis and only living organisms can be counted accurately and quickly by analyzing trapping carriers that may have caught living organisms. In addition, because the time before replacement of the trapping carrier can be prolonged by causing the support container supporting the trapping carrier to move in the horizontal direction, it becomes easier to identify the trapping carrier to be analyzed.

In addition to the above configuration, the floating bacteria counting method includes a start signal transmitting step of transmitting a start signal from the floating bacteria trapping device to the particle counting device if the floating bacteria trapping device starts the trapping during a counting operation of the particle counting device, and a recording step of recording a counting state by the particle counting device and recording a trapping state by the floating bacteria trapping device by associating with an elapsed time from a time when the start signal is transmitted.

According to the above configuration, the particle counting device records the counting state and the floating bacteria trapping device records the trapping state by associating with the elapsed time from the time when the start signal is transmitted and thus, a chronological relationship between the counting state of the particle counting device and the trapping state of the floating bacteria trapping device can be clarified and the trapping carrier mounted on the floating bacteria trapping device when particles are detected by the particle counting device can be grasped and therefore, only living organisms can be counted quickly and accurately by analyzing only trapping carriers that may have caught living organisms.

In addition to the above configuration, in the recording step, the particle counting device records the number of counted particles by associating with the elapsed time and when the trapping carrier is replaced, the floating bacteria trapping device records the replacement by associating with the elapsed time.

According to the above configuration, by checking content recorded by the particle counting device and the floating bacteria trapping device based on the elapsed time, the trapping carrier mounted on the floating bacteria trapping device when particles are detected by the particle counting device can be grasped and therefore, only living organisms can be counted quickly and accurately by analyzing only trapping carriers that may have caught living organisms.

In the above configuration, if the particle counting device detects particles floating in the air, an alarm is output.
According to the above configuration, the operator can make sure that particles are floating in the air due to the output of an alarm and can analyze the trapping carrier mounted on the floating bacteria trapping device when the alarm is output and therefore, only living organisms can be counted quickly and accurately by analyzing only trapping carriers that may have caught living organisms.

A floating bacteria trapping method according to the present invention is a floating bacteria trapping method of counting living organisms caught by a trapping carrier by analyzing the trapping carrier mounted on a floating bacteria trapping device trapping floating bacteria in air while causing a support container supporting the trapping carrier to move in a horizontal direction so that trajectories drawn by center points of regions on the trapping carrier against which the air collides do not intersect, including a trapping start signal transmitting step of transmitting a trapping start instruction signal to the floating bacteria trapping device when a particle counting device that counts particles floating in the air in a room in which the floating bacteria trapping device is arranged detects particles floating in the air equal to a threshold or more, a trapping start step of starting trapping of floating bacteria in the air from a time when the floating bacteria trapping device receives the trapping start instruction signal, and a living organism counting step of counting living organisms caught by the trapping carrier by analyzing the trapping carrier when a preset time passes after the trapping is started.

According to the present invention, useless trapping and time and efforts of analysis can be saved by a trapping operation by a floating bacteria counting device being started after detection of particles by a particle counting device so that only living organisms can be counted quickly and accurately.

In addition, according to the present invention, there is provided a floating bacteria counting system that includes the floating bacteria trapping device and the particle counting device that counts particles floating in air in a room in which the floating bacteria trapping device is arranged according to any one of claims 1 to 3 and counts living organisms caught by a trapping carrier by trapping floating bacteria in the air by the trapping carrier mounted on the floating bacteria trapping device while replacing the trapping carrier mounted on the floating bacteria trapping device and analyzing the trapping carrier, wherein the trapping carrier mounted on the floating bacteria trapping device when particles floating in the air are detected by the floating bacteria trapping device is the trapping carrier to be analyzed.

In the above configuration, the floating bacteria trapping device includes a start signal transmitting unit that transmits a start signal to the particle counting device when trapping of floating bacteria in the air is started and a trapping state recording unit that records a trapping state by associating with an elapsed time from a time when the start signal is transmitted, and the particle counting device includes a counting state recording unit that records a counting state by associating with the elapsed time from the time when the start signal is received.

In the above configuration, the counting state recording unit records the number of counted particles by associating with the elapsed time, and when the trapping carrier is replaced, the trapping state recording unit records the replacement by associating with the elapsed time.
In the above configuration, the particle counting device includes an alarm output unit that outputs an alarm when particles floating in the air are detected.

In addition, according to the present invention, there is provided a floating bacteria counting system that includes the floating bacteria trapping device and the particle counting device that counts particles floating in air in a room in which the floating bacteria trapping device is arranged according to any one of claims 1 to 3 and counts living organisms caught by a trapping carrier by trapping floating bacteria in the air by the trapping carrier mounted on the floating bacteria trapping device, wherein the particle counting device includes a trapping start instruction signal transmitting unit that transmits a trapping start instruction signal to the floating bacteria trapping device when particles floating in the air equal to a threshold or more are detected, and the floating bacteria trapping device includes a trapping start unit that starts trapping of floating bacteria in the air when the trapping start instruction signal is received, and a trapping continuation unit that that continues the trapping until a preset time passes after the trapping is started by the trapping start unit.

### Advantageous Effects of Invention

According to the present invention, a floating bacteria trapping device includes a driving mechanism that causes a support container to move in the horizontal direction so that trajectories drawn by center points of regions on a trapping carrier against which the air having passed through a nozzle collides do not intersect and thus, a specific portion of the trapping carrier can be prevented from being recessed due to the wind pressure or drying. Therefore, floating bacteria in the air can be caught continuously for a long time without decreasing trapping efficiency even if the time before the trapping carrier being replaced is prolonged.

Also, by selecting a trapping carrier mounted on a floating bacteria trapping device when particles floating in the air are detected by a particle counting device that detects particles floating in the air in a room in which the floating bacteria trapping device is arranged as the trapping carrier to be analyzed, trapping carriers mounted on the floating bacteria trapping device in a time zone in which no particle is detected by the particle counting device can be excluded from analysis and only living organisms can be counted accurately and quickly by analyzing only trapping carriers that may have caught living organisms.

### Brief Description of Drawings

FIG. 1 is a block diagram showing an overall configuration of a floating bacteria counting system according to a first embodiment of the present invention.
FIG. 2 is a diagram schematically showing a longitudinal section of a floating bacteria counting device according to the embodiment.
FIG. 3 is a plan view of a top cover of the floating bacteria counting device according to the embodiment.
FIG. 4 is an enlarged view of a nozzle portion provided in the top cover according to the embodiment.
FIG. 5 is a diagram schematically showing the longitudinal section of a portion where a nozzle and a trapping carrier are set up in the floating bacteria counting device according to the embodiment.
FIG. 6 is a diagram schematically showing an example of a trajectory of a point obtained by projecting position coordinates of a pinhole according to the embodiment on the trapping carrier immediately below the pinhole drawn on the trapping carrier by movement of a support container by a driving mechanism in a horizontal direction.
FIG. 7 is a block diagram showing a functional configuration of a particle counting device according to the embodiment.
FIG. 8 is a block diagram showing the functional configuration of a bacterial cell analysis device according to the embodiment.
FIG. 9 is a diagram showing a procedure for a floating bacteria counting method according to the embodiment.
FIG. 10 is a flow chart showing the procedure for counting living organisms by the ATP method according to the embodiment.
FIG. 11 is a block diagram showing the functional configuration of the floating bacteria counting device according to a second embodiment.
FIG. 12 is a block diagram showing the functional configuration of the particle counting device according to the embodiment.
FIG. 13A is a diagram showing an example of a trapping state recorded by a trapping state recording unit of the floating bacteria counting device according to the embodiment and FIG. 13B is a diagram showing an example of a counting state recorded by a counting state recording unit of the particle counting device according to the embodiment.
FIG. 14 is a diagram showing the procedure for the floating bacteria counting method according to the embodiment.
FIG. 15 is a block diagram showing the functional configuration of the particle counting device according to a third embodiment.
FIG. 16 is a block diagram showing the functional configuration of the floating bacteria counting device according to the embodiment.
FIG. 17 is a diagram showing the procedure for the floating bacteria counting method according to the embodiment.
FIG. 18A is a diagram schematically showing a transverse section of an upper part of the floating bacteria counting device according to a fourth embodiment of the present invention and FIG. 18B is a diagram schematically showing the longitudinal section of the floating bacteria counting device according the fourth embodiment.

### Description of Embodiments

The embodiments of the present invention will be described below with reference to the appended drawings.

### (First embodiment)

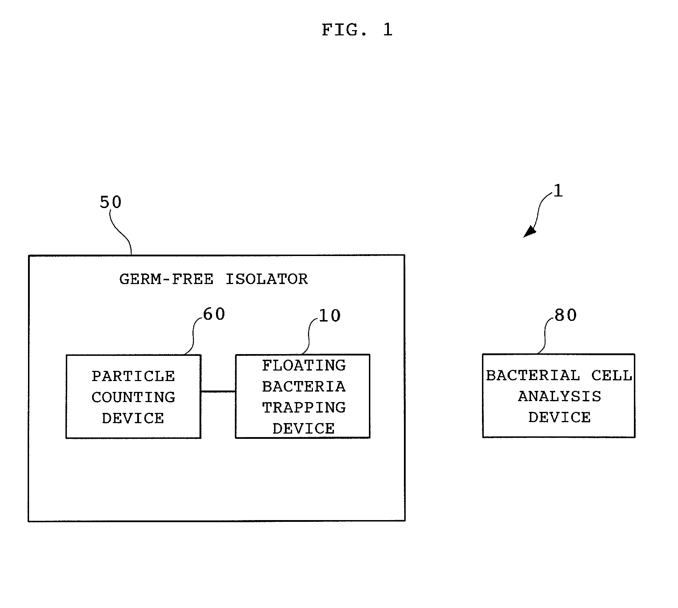

First, the first embodiment of the present invention will be described. FIG. 1 is a block diagram showing an overall configuration of a floating bacteria counting system 1 according to the first embodiment of the present invention. As shown in FIG. 1, the floating bacteria counting system 1 includes a floating bacteria trapping device 10 and a particle counting device 60 set up inside a germ-free isolator 50 and a bacterial cell analysis device 80 set up outside the germ-free isolator 50 and the floating bacteria trapping device 10 and the particle counting device 60 are located close to each other and connected to be communicable by wire or by radio.

The germ-free isolator 50 is a room (space) hermetically sealed to keep an aseptic condition and can be disassembled and assembled (set up). In the present embodiment, drugs are manufactured in the germ-free isolator 50.

### (Configuration of the floating bacteria trapping device)

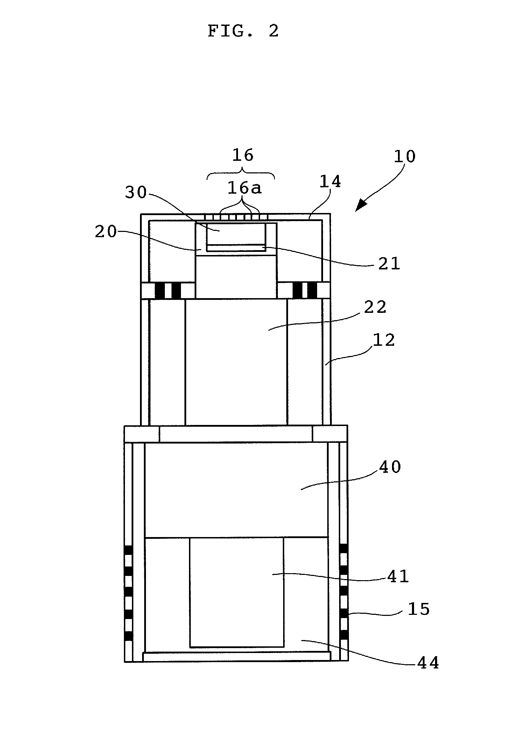

FIG. 2 is a diagram schematically showing a longitudinal section of the floating bacteria counting device 10. As shown in FIG. 2, the floating bacteria counting device 10 is provided with a casing 12 forming an outer wall of a hollow cylindrical shape. The casing 12 has a circular opening formed on a ceiling surface and the opening is covered with a removable top cover 14. The top cover 14 is provided with a nozzle 16 to allow the air to pass through. A trapping carrier 30 to catch floating bacteria in the air is arranged below the nozzle 16. A support container 20 in a columnar shape is filled with the trapping carrier 30 in a germ-free manner.

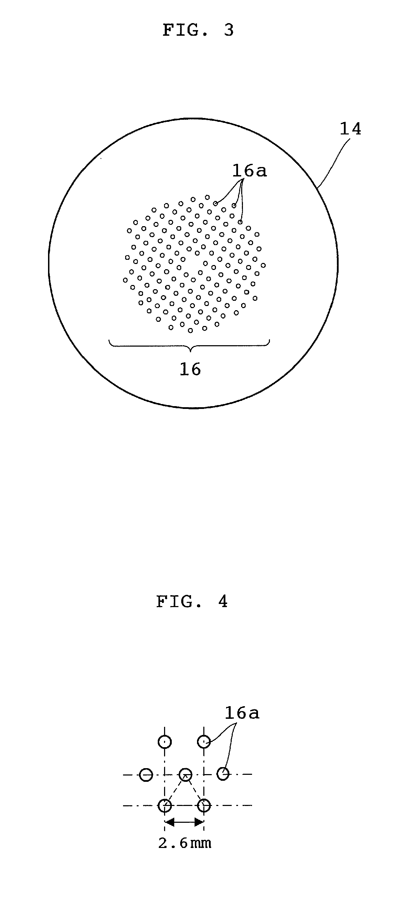

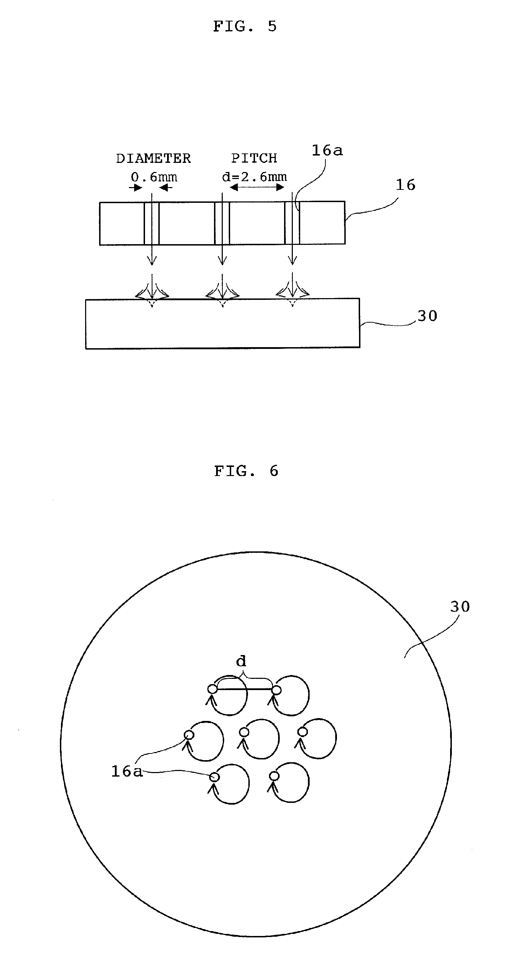

FIG. 3 is a plan view of the top cover 14, FIG. 4 is an enlarged view of a portion of the nozzle 16 provided in the top cover 14, and FIG. 5 is a diagram schematically showing the longitudinal section of a portion where the nozzle 16 and the trapping carrier 30 are set up in the floating bacteria counting device 10 according to the embodiment. As shown in these figures, the nozzle 16 includes a plurality of pinholes 16a arranged at equal intervals. The diameter of the pinhole 16a can be set to, for example, 0.6 mm and a pitch interval d between the pinholes 16a to 2.6 mm. The air sucked in by a fan 40 passes through the plurality of pinholes 16a before being caused to collide against the trapping carrier 30.

The trapping carrier 30 is arranged horizontally so as to be orthogonal to the flow of air sucked in by the nozzle 16. Thus, the air sucked in by the nozzle 16 collides against the trapping carrier 30 and change the flow to the horizontal direction and at this point, floating bacteria in the air are captured on the surface of the trapping carrier 30.

The fan 40 to generate the flow of air from the nozzle 16 into the casing 12 and a fan driving motor 41 to drive the fan 40 are provided in a lower part of the internal space of the casing 12. Further downstream is provided a filter medium 44 to clean the air to be discharged.

A gap is formed between the support container 20 filled with the trapping carrier 30 and the inner wall of the casing 12 and an exhaust port 15 is formed on the side surface in the lower part of the casing 12. Therefore, the air flowing in the horizontal direction after the collision against the trapping carrier 30 flows downward by passing through the gap before being discharged through the exhaust port 15.

As the trapping carrier 30, a water soluble resin of gel-sol transitional polymer that is in a gel state during trapping operation and makes a transition to a sol state when heated to a predetermined temperature (for example, 40°C or lower). Particularly, the trapping carrier 30 preferably has the phase transition temperature of 15 to 40°C and is in a gel state of appropriate strength at 25°C. By causing a phase transition in this temperature range, caught living organisms can avoid being killed. To prevent drying due to collision of the air, the trapping carrier 30 is preferably drought resistant. A polymer containing gelatin and glycerol is preferable as the polymer. The gelatin concentration is adjusted to 5 to 50% by weight and the glycerol concentration is adjusted to 10 to 40% by weight in accordance with drought resistance performance needed from the trapping time and the phase transition temperature.

The support container 20 is removable from the floating bacteria counting device 10. A hole (not shown) to discharge the solated trapping carrier 30 is provided at the bottom of the support container 20 and a filter 21 to filter and remove the trapping carrier 30 and also to capture floating bacteria is provided thereon. The filter 21 having the hole diameter of about 0.45 mm is used.

A driving mechanism 22 to move the support container 20 in the horizontal direction and the vertical direction is provided below the support container 20. The driving mechanism 22 moves the support container 20 in the horizontal direction and the vertical upward direction during trapping operation in which the fan 40 is driven. The driving mechanism 22 has a motor (not shown) as a driving source and is provided with gear trains (not shown) of two systems causing movement in the horizontal direction and movement in the vertical direction. As the gear train in the horizontal direction, for example, an internal gear may be mounted below the support container 20 to enable the internal gear to engage with an external gear having a larger outer circumference than the internal gear. Alternatively, a plurality of eccentric arms may be mounted at the bottom of the support container 20. As the gear train in the vertical direction, for example, a rack gear may be mounted below the support container 20 to enable the rack gear to engage with a pinion gear.

When the air having passed through the pinhole 16a collides against the trapping carrier 30, as shown in FIG. 5, an region R against which the air collides is created on the trapping carrier 30 immediately below the pinhole 16a and the driving mechanism 22 moves the support container 20 in the horizontal direction in such a way that trajectories drawn by center points (that is, the point obtained by projecting position coordinates of the pinhole 16a onto the trapping carrier 30 immediately below the pinhole 16a) of the regions R do not intersect. FIG. 6 is a diagram schematically showing an example of the trajectory of a point obtained by projecting position coordinates of the pinhole 16a on the trapping carrier 30 immediately below the pinhole 16a drawn on the trapping carrier 30 by movement of the support container 20 by the driving mechanism 22 in the horizontal direction. If, as shown in FIG. 6, the pitch interval between the pinholes 16a is d, the driving mechanism 22 moves the support container 20 in the horizontal direction in such a way that the support container 20 draws a circle of a diameter less than d. Accordingly, the portion on the surface of the trapping carrier 30 immediately below the pinhole 16a is updated and therefore, the collision of the air against a specific portion of the trapping carrier 30 can be prevented and so the whole surface of the trapping carrier 30 can be made a trapping surface.

Incidentally, the movement of the support container 20 in the horizontal direction is not limited to a circular motion and only adjustments to avoid an intersection of trajectories drawn by center points of regions on the trapping carrier 30 against which the air having passed through the pinholes 16a collides need to be made. For example, the support container 20 may be moved to draw an ellipse or polygon or a character such as Z, S, and M.

The traveling speed in the vertical upward direction is set in accordance with a recessing speed of the trapping carrier 30 due to drying and the wind pressure. The traveling speed in the vertical upward direction when the air is sucked in at the speed of 160 m³/min is preferably 1 mm/hr. The traveling speed in the horizontal direction is preferably 0.5 to 1 rpm.

The floating bacteria counting device 10 is provided with a power supply to supply power to the floating bacteria counting device 10, a switch to give instructions to start a trapping operation, and a button pressed by a worker when the trapping carrier 30 is replaced, which are not shown, and also provided with a CPU (Central Processing Unit) to control the above units, the driving mechanism 22, and the fan driving motor 41, a timer to clock the time, a memory to store various kinds of data and programs, a display to output recorded data, and a printer.

The floating bacteria counting device 10 configured as described above sets the trapping carrier 30 below the nozzle 16 by the support container 20, drives the fan 40 by the fan driving motor 41 to suck the air into the casing 12. Accordingly, the air is sucked in from the nozzle 16 vertically downward and the air collides against the trapping carrier 30 to change the flow thereof in the horizontal direction and also floating bacteria in the air are captured by the trapping carrier 30 in a gel state. During trapping operation, the trapping surface immediately below the nozzle 16 is updated by the horizontal movement of the support container 20 and also the gap length between the nozzle 16 and the trapping surface is kept.

### (Configuration of the particle counting device)

The particle counting device 60 is a general particle counter that counts particles (all particles are included and hereinafter, referred to as "dust") floating in the air and continuously counts particles in the air in real time by counting scattered light scattered by dust in the air after the air being irradiated with light, and a count result is stored in memory (not shown), displayed in a display, or printed. The particle counting device 60 also includes a switch (not shown) to start a counting operation.

As a characteristic function in the present embodiment, the particle counting device 60 includes an alarm output unit 61.
The alarm output unit 61 includes a CPU, program, and sound source data and outputs an alarm when at least one particle of dust is counted.

### (Configuration of the bacterial cell analysis device)

The bacterial cell analysis device 80 is a device that analyzes bacterial cell caught by the trapping carrier 30 by the ATP (Adenosine TriPhosphate) method. The ATP method is a method that uses ATP, which is a chemical substance always contained in living organisms, as an index of the number of bacteria and uses bioluminescence by luciferase, which is an enzyme of biological origin, and luciferin, which is a substrate protein thereof. More specifically, ATP of living organisms is extracted from a sample and is caused to emit light by adding an illuminant (luciferin-luciferase mixed solution) thereto to determine the amount of ATL from luminescence intensity and the amount of ATP is converted into the number of living organisms. According to the ATP method, the number of living organisms can be determined in a few minutes to a few tens of minutes.

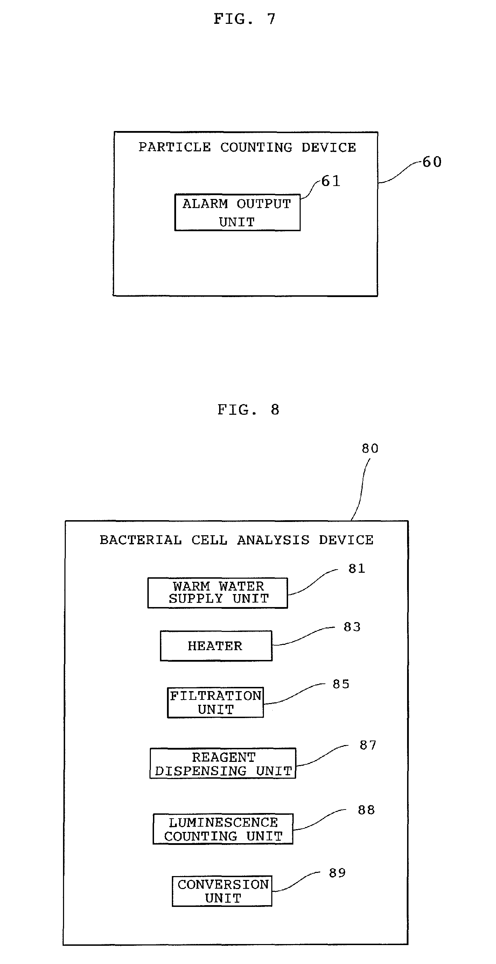

FIG. 8 is a block diagram showing the functional configuration of the bacterial cell analysis device 80. As shown in FIG. 8, the bacterial cell analysis device 80 includes a warm water supply unit 81, a heater 83, a filtration unit 85, a reagent dispensing unit 87, a luminescence counting unit 88, and a conversion unit 89.

The warm water supply unit 81 includes a pump, heater, nozzle and the like, which are not shown, and supplies warm water to dilute the trapping carrier 30. The warm water is preferably a sterilized solution and the preferable composition thereof includes a phosphoric acid buffer and physiological saline solution. If the concentration of gel and glycerol contained in the trapping carrier 30 is low, gel of sufficient strength cannot be obtained and if the concentration thereof is high, the viscosity of sol after the phase transition becomes high, making filtration difficult. Therefore, if the trapping carrier 30 of high polymer concentration is used, it is preferable to dilute the concentration of gelatin to 10% or less and the concentration of glycerol to 25% or less by a diluent after solation before filtration.

The heater 83 causes a transition to sol by heating the trapping carrier 30 in a gel state.
The filtration unit 85 includes a vacuum pump and filters the solated trapping carrier 30 to cause bacteria (living organisms and free ATP) to remain on the filter 21.

The reagent dispensing unit 87 includes a nozzle, actuator and the like and dispenses an ATP eliminator to remove free ATP and an ATP extractant to extract ATP of living organisms to bacteria remaining on the filter 21.
The luminescence counting unit 88 includes a PMT (Photomultiplier Tube) and counts an emission quantity by counting photons.

The conversion unit 89 is a function realized by a program being executed by a CPU and converts the emission quantity counted by the luminescence counting unit 88 into an amount of ATP and converts the amount of ATP into the number of living organisms.

### (Floating bacteria counting method)

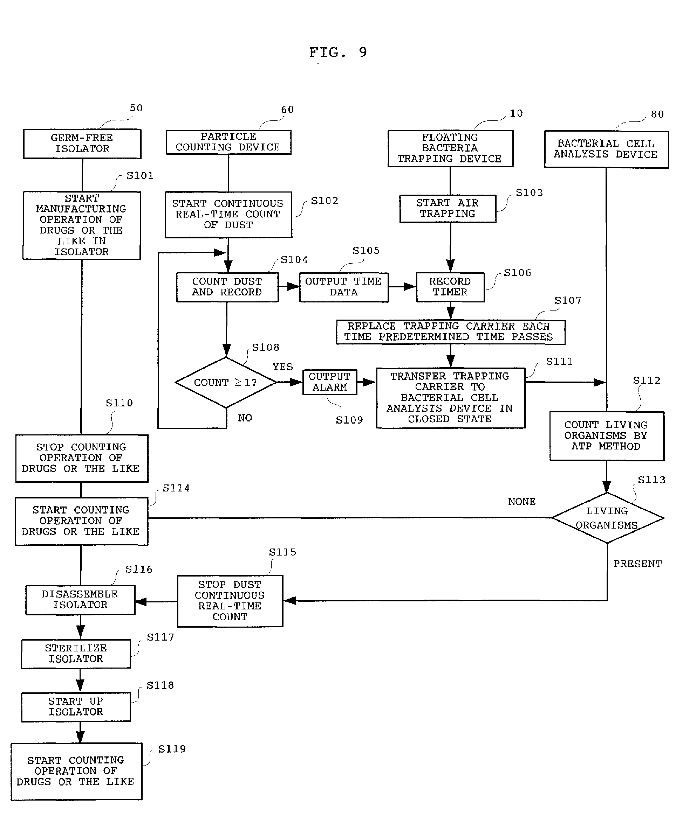

Next, the floating bacteria counting method executed by a floating bacteria counting system according to the present embodiment will be described with reference to FIG. 9. It is assumed here that the timer of the floating bacteria counting device 10 is set to, for example, 1 hr.

A drug manufacturing worker starts a manufacturing operation of drugs or the like in the germ-free isolator 50 (step S101).

A floating bacteria counting operator turns on a switch to start a counting operation of the particle counting device 60. Accordingly, the particle counting device 60 starts a continuous real-time count of dust in the germ-free isolator 50 (step S102). Further, the floating bacteria counting operator sets the support container 20 filled with the trapping carrier 30 to the floating bacteria counting device 10 and turns on a switch to start a trapping operation. Accordingly, clocking by the timer is started and also the fan 40 is driven by the fan driving motor 41 to start the trapping operation of floating bacteria in which the air in the germ-free isolator 50 collides against the trapping carrier 30. During trapping operation, the support container 20 makes a horizontal movement and vertical movement by being driven by the driving mechanism 22 (step S103).

The particle counting device 60 counts dust particles in the germ-free isolator 50 and records the number in a memory (step S104) and outputs recorded content and time data indicating the time of the recorded content to the floating bacteria counting device 10 (step S105).

After the time data being received from the particle counting device 60, the floating bacteria counting device 10 records the time data by associating with the time being clocked by the timer (step S106).

Each time the timer clocked by the floating bacteria counting device 10 becomes due, the floating bacteria counting operator replaces the trapping carrier 30 of the floating bacteria counting device 10 together with the support container 20 (step S107). The floating bacteria counting operator manages the trapping carrier 30 removed from the floating bacteria counting device 10 in such a way that the order of replacement of the trapping carriers 30 is known.

If the number of dust particles counted in step S104 is zero (step S108: No), the particle counting device 60 continues the dust counting operation in the germ-free isolator 50 (step S104). On the other hand, if the number of dust particles counted in step S104 is one or more (step S108: Yes), the alarm output unit 61 of the particle counting device 60 outputs an alarm (step S109). The manufacturing operation of drugs in the germ-free isolator 50 is thereby temporarily stopped (step S110).

The floating bacteria counting operator removes the trapping carrier 30 mounted on the floating bacteria counting device 10 together with the support container 20 to transfer the trapping carrier 30 to the bacterial cell analysis device 80 in a closed state when the alarm is output or after a predetermined time passes thereafter (step S111). If the trapping carrier 30 mounted on the floating bacteria counting device 10 cannot be grasped in real time when an alarm is output from the particle counting device 60 because the floating bacteria counting operator is not present at that time or the like, the floating bacteria counting operator distinguishes the trapping carrier 30 mounted on the floating bacteria counting device 10 when dust is counted based on time data from the particle counting device 60 recorded in the floating bacteria counting device 10.

The bacterial cell analysis device 80 counts living organisms in the trapping carrier 30 transferred from the floating bacteria counting device 10 by the ATP method (step S112). If, as a result of count, no living organism is detected (step S113: None), the stopped manufacturing operation of drugs in the germ-free isolator 50 is restarted (step S114). On the other hand, if living organisms are detected, the dust continuous real-time count by the particle counting device 60 is stopped (step S115). Then, the germ-free isolator 50 is disassembled (stepS116) and sterilized by ultraviolet rays or an ozone gas (step S117) to start up the germ-free isolator 50 again (step S118). Then, the manufacturing operation of drugs in the germ-free isolator 50 is restarted (step S119).

In the above embodiment, the particle counting device 60 outputs an alarm when at least one dust particle is counted, but the present embodiment is not limited to the above example and conditions for outputting an alarm may include a condition of the particle size of dust. For example, an alarm may be output when at least one dust particle whose particle size is 0.5 µm or more is detected.

### (Living organism number counting by the ATP method)

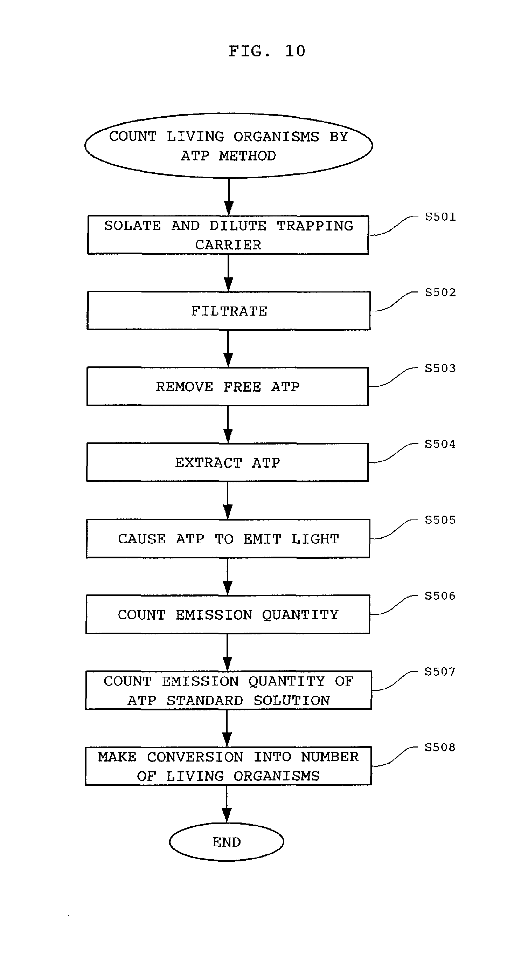

Next, the procedure for counting living organisms by the ATP method in step S112 in FIG. 9 will be described with reference to the flow chart shown in FIG. 10.
First, the bacterial cell analysis device 80 heats the trapping carrier 30 to the phase transition temperature to cause the phase transition of the trapping carrier 30 to a sol state by controlling the heater 83 so that the trapping carrier 30 in the support container 30 set to the bacterial cell analysis device 80 is maintained at temperature 30 to 37°C for about, for example 10 min. At the same time, for example, 10 to 25 mL of a sterilized solution is injected into the support container 20 by the warm water supply unit 81 for dilution so that the gelatin concentration of the trapping carrier 30 falls to 10% or less and the glycerol concentration falls to 25% or less (step S501).

Next, the bacterial cell analysis device 80 captures bacteria (living organisms and free ATP of non-biological origin liberated outside bacteria) on the filter 21 by filtrating and removing the diluted trapping carrier 30 from inside the support container 20 through the filtration unit 85 (step S502).

Next, the bacterial cell analysis device 80 adds an ATP eliminator onto the filter 21 through the reagent dispensing unit 87. The ATP eliminator is a reagent that decomposes the free ATP and, for example, an ATP eliminator containing apyrase is used. Accordingly, free ATP excluding ATP inside living organism is removed (step S503).

Next, the bacterial cell analysis device 80 generates a sample by adding an ATP extractant onto the filter 21 through the reagent dispensing unit 87. The ATP extractant is a reagent that dissolves the cell membrane of living organisms to extract ATP inside living organisms and, for example, an ATP extractant containing a surface active agent, trichloroacetic acid (TCA), Tris buffer, ethanol, or lytic enzyme having protease activity is used (step S504). Accordingly, the cell membrane of living organisms is dissolved and ATP inside living organisms is extracted and thus, ATP can be detected.

Next, the bacterial cell analysis device 80 adds the sample generated in step S504 to the luminescence reagent to cause ATP contained in the sample to emit light (step S505) and the luminescence counting unit 88 counts the emission quantity thereof(step S506).
Subsequent to the luminescence count of the sample, the luminescence counting unit 88 counts the emission quantity of the ATP standard solution (step S507).

Next, the bacterial cell analysis device 80 converts the counted emission quantity of the sample into the ATP amount and further converts the ATP amount into the number of living organisms based on the ATP amount in the ATP standard solution and the emission quantity (step S508).

In the above embodiment, an example in which an ATP eliminator, ATP extractant, and luminescence reagent are added is taken, but reagents to be added are not limited to the above example and a portion of reagents may be omitted or another reagent may be added if necessary. The count of the emission quantity of the ATP standard solution may be made before the emission quantity count of the sample. Bacteria to be caught and counted are not specifically limited, but, for example, Bacillus cereus, Bacillus spizizenii, Coryneb acterium renale, Micrococcus luteus, S. aureus, S. epideridis, Citrobacter freundii, Pseudomonas aeruginosa, and Serratia marcescens can be cited.

According to the embodiment of the present invention, as described above, the driving mechanism 22 of the floating bacteria counting device 10 causes the support container 20 to move in the horizontal direction in such a way that a circle of a diameter less than the pitch interval d of the pinholes 16a is drawn and therefore, the support container 20 can be moved in the horizontal direction so that trajectories drawn by center points of regions on the trapping carrier 30 against which the air having passed through the pinhole 16a collides do not intersect and a portion immediately below the pinhole 16a on the surface of the trapping carrier 30 is updated to prevent a specific portion of the trapping carrier 30 from being recessed due to the wind pressure or drying. Accordingly, one trapping carrier 30 can be used to catch floating bacteria in the air continuously for a long time without causing the trapping efficiency to decline without the need to replace the trapping carrier 30 in a short time. In the above embodiment, the nozzle 16 is formed of the plurality of pinholes 16a arranged at equal intervals, but such a configuration is only an example. If the nozzle 16 is configured differently, adjustments may be made to move the support container 20 in the horizontal direction so that trajectories drawn by center points of regions on the trapping carrier 30 against which the air having passed through the pinhole 16a collides do not intersect.

The support container 20 rises in the vertical direction due to the driving mechanism 22 and thus, even if the trapping carrier 30 immediately below the pinhole 16a may be recessed due to drying or the wind pressure during trapping operation, the support container 20 rises to keep the gap length between the pinhole 16a and the trapping surface so that high trapping efficiency can be maintained.

The floating bacteria counting operator can make sure that dust is floating in the germ-free isolator 50 based on the output of an alarm from the particle counting device 60 and analyze the trapping carrier 30 mounted on the floating bacteria counting device 10 when the alarm is output and therefore, only the trapping carrier 30 that may have caught living organisms can be analyzed. Therefore, time and efforts to analyze trapping carriers that have not caught bacterial cell can be saved and only living organisms can be counted quickly and accurately. Moreover, the time before the replacement of the trapping carrier 30 can be prolonged and therefore, identification of the trapping carrier 30 to be analyzed can be made easier.

By using the gel-sol transitional trapping carrier 30, bacteria captured on the surface of the trapping carrier 30 can be recovered by filtration and therefore, a recovery operation of caught floating bacteria becomes simpler.

The above embodiment is described by assuming that the particle counting device 60 outputs an alarm, but the present embodiment is not limited to the above example and a device connected to the particle counting device 60 may output an alarm.

### (Second embodiment)

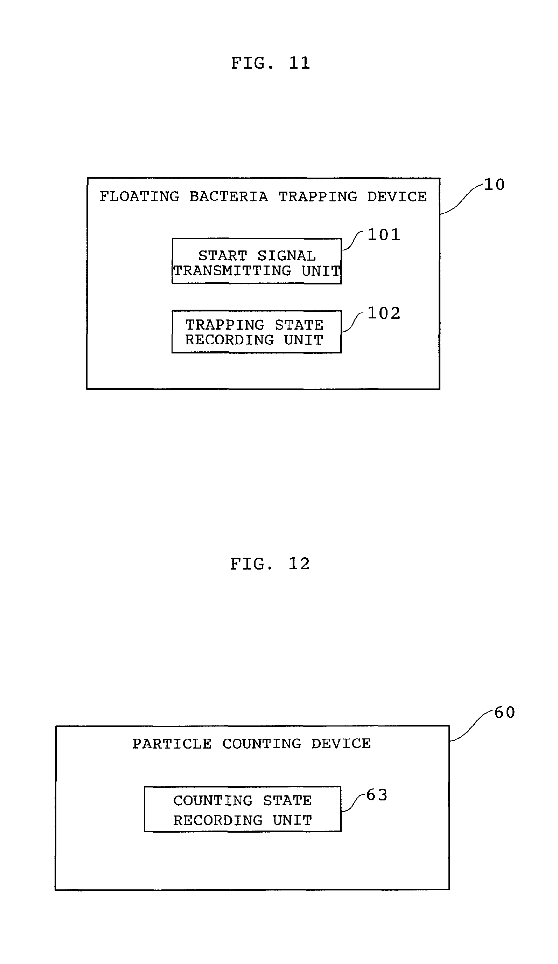

Next, the second embodiment of the present invention will be described.
The floating bacteria counting device 10 according to the present embodiment includes, in addition to the function of the floating bacteria counting device 10 according to the first embodiment, as shown in FIG. 11, a start signal transmitting unit 101 and a trapping state recording unit 102. The function is realized by a program being executed by the CPU of the floating bacteria counting device 10.

The start signal transmitting unit 101 transmits a start signal to the particle counting device 60 when a trapping operation of floating bacteria is started by the floating bacteria counting device 10.
The trapping state recording unit 102 records the trapping state in memory by associating with the elapsed time from the time when the start signal transmitting unit 101 transmits a start signal. More specifically, the trapping state recording unit 102 records the replacement time of the trapping carrier 30 by associating with the elapsed time.

The particle counting device 60 according to the present embodiment includes, in addition to the function of the floating bacteria counting device 10 according to the first embodiment, as shown in FIG. 12, a counting state recording unit 63. The function is realized by a program being executed by the CPU of the particle counting device 60.

The counting state recording unit 63 records the counting state in a memory by associating with the elapsed time after a start signal is received from the start signal transmitting unit 101. More specifically, the counting state recording unit 63 records the number of counted dust by associating with the elapsed time.

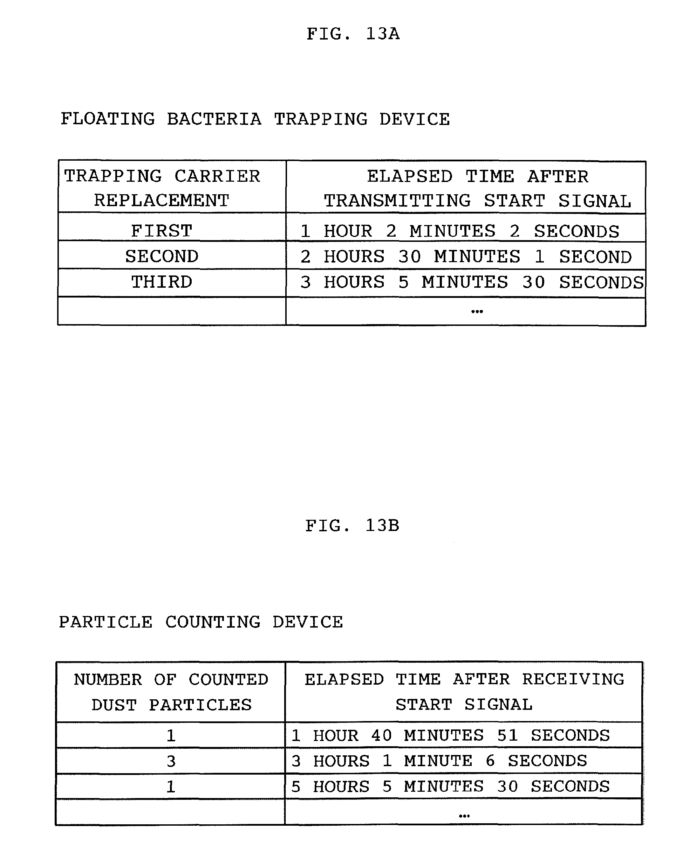

FIG. 13A shows an example of the trapping state recorded by the trapping state recording unit 102 of the floating bacteria counting device 10 and FIG. 13B shows an example of the counting state recorded by the counting state recording unit 63 of the particle counting device 60. A chronological relationship between the time when dust is detected in the germ-free isolator 50 and the time when the trapping carrier 30 is replaced becomes clear from the data and only the trapping carrier 30 mounted on the floating bacteria counting device 10 when dust is detected, that is, the trapping carrier 30 that may have caught floating bacteria can be analyzed by the bacterial cell analysis device 80.

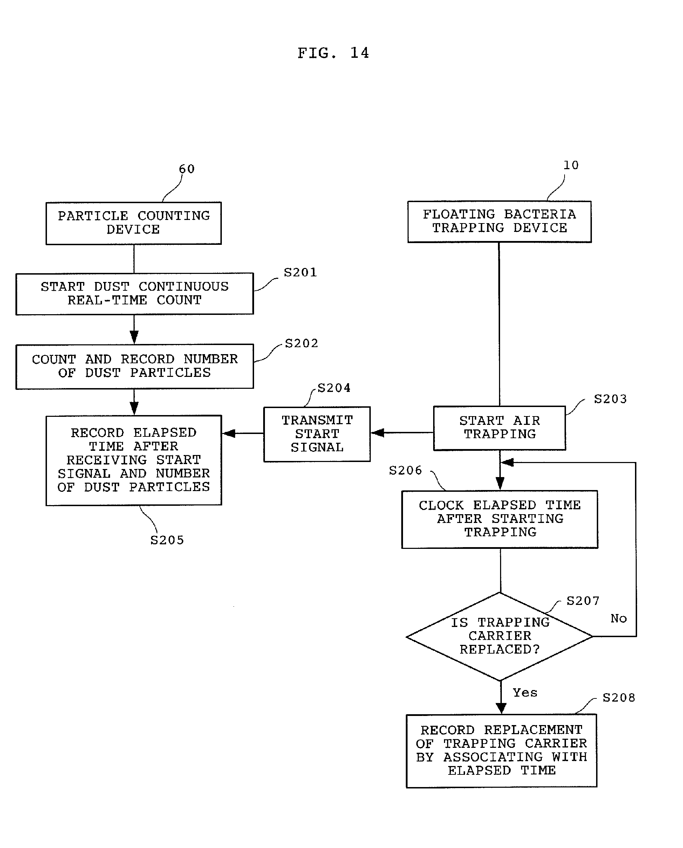

Next, the floating bacteria counting method according to the present embodiment will be described with reference to FIG. 14. First, the floating bacteria counting operator turns on the switch to start the counting operation of the particle counting device 60. Accordingly, the particle counting device 60 starts a continuous real-time count of dust in the germ-free isolator 50 (step S201). The particle counting device 60 counts dust particles and records the number in memory (step S202).

Next, the floating bacteria counting operator sets the support container 20 filled with the trapping carrier 30 to the floating bacteria counting device 10 and turns on a switch to start a trapping operation. Accordingly, the floating bacteria counting device 10 starts the trapping operation (step S203) and the start signal transmitting unit 101 transmits a start signal to the particle counting device 60 (step S204).

When the particle counting device 60 receives the start signal from the floating bacteria counting device 10, the counting state recording unit 63 associates and records the elapsed time from the time when the start signal is received and the number of counted dust particles (step S205).

On the other hand, the floating bacteria counting device 10 keeps the elapsed time from the time when the trapping operation is started and the start signal is transmitted by a timer (step S206). Then, when the timer becomes due and the floating bacteria counting device 10 detects the replacement of the trapping carrier 30 from button input by the floating bacteria counting operator (step S207: Yes), the floating bacteria counting device 10 associates and records the replacement of the trapping carrier 30 with the elapsed time in memory.

Accordingly, data as shown in FIG. 13A is recorded in the memory of the floating bacteria counting device 10 and data as shown in FIG. 13B is recorded in the memory of the particle counting device 60. The floating bacteria counting operator grasps the chronological relationship between the counting state of the particle counting device 60 and the trapping state of the floating bacteria counting device 10 by referring to the data by displaying the data in a display or printing the data and can grasp the trapping carrier 30 mounted on the floating bacteria counting device 10 when dust is detected by the particle counting device 60 so that only the trapping carrier 30 that may have caught living organisms can be analyzed by the bacterial cell analysis device 80. Therefore, time and efforts to analyze trapping carriers that have not caught bacterial cell can be saved and only living organisms can be counted quickly and accurately.

While the floating bacteria counting device 10 detects the replacement of the trapping carrier 30 from button input by the floating bacteria counting operator, but the method by which the floating bacteria counting device 10 detects the replacement of the trapping carrier 30 is not limited to the above example and the replacement of the trapping carrier 30 may be detected by, for example, a sensor capable of recognizing the removal of the top cover 14 or a change in weight of the trapping carrier 30 or the replacement of the trapping carrier 30 may be recognized when the timer becomes due and the next timer is started.

### (Third embodiment)

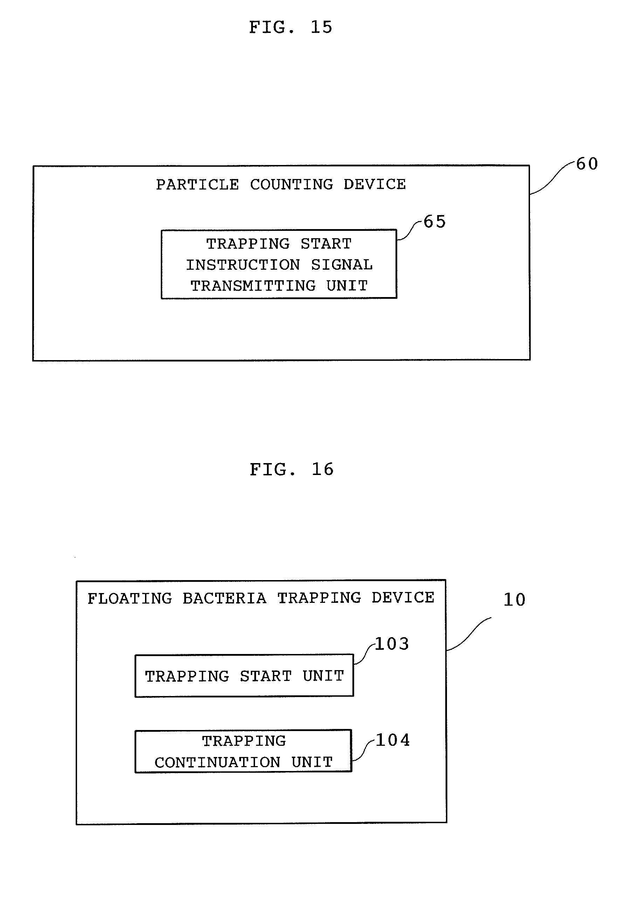

Next, the third embodiment of the present invention will be described. In the present embodiment, a case when the cleanliness required inside the germ-free isolator 50 is lower than in the first embodiment will be described. The particle counting device 60 according to the present embodiment includes, in addition to the function of the particle counting device 60 according to the first embodiment shown in FIG. 7, a trapping start instruction signal transmitting unit 65 shown in FIG. 15. The function is realized by a program being executed by the CPU of the particle counting device 60. The trapping start instruction signal transmitting unit 65 transmits a trapping start instruction signal to the floating bacteria counting device 10 when dust floating in the air equal to or more than a threshold (for example, 35 particles in 1 m³) is detected.

The floating bacteria counting device 10 according to the present embodiment includes, in addition to the function of the floating bacteria counting device 10 according to the first embodiment, a trapping start unit 103 and a trapping continuation unit 104 shown in FIG. 16. These functions are realized by programs being executed by the CPU of the floating bacteria counting device 10.

When the trapping start instruction signal is received from the particle counting device 60, the trapping start unit 103 automatically turns on a switch to start a trapping operation of floating bacteria in the air.
The trapping continuation unit 104 continues the trapping operation until a predetermined time (for example, 10 min) passes from the time when trapping is started by the trapping start unit 103.

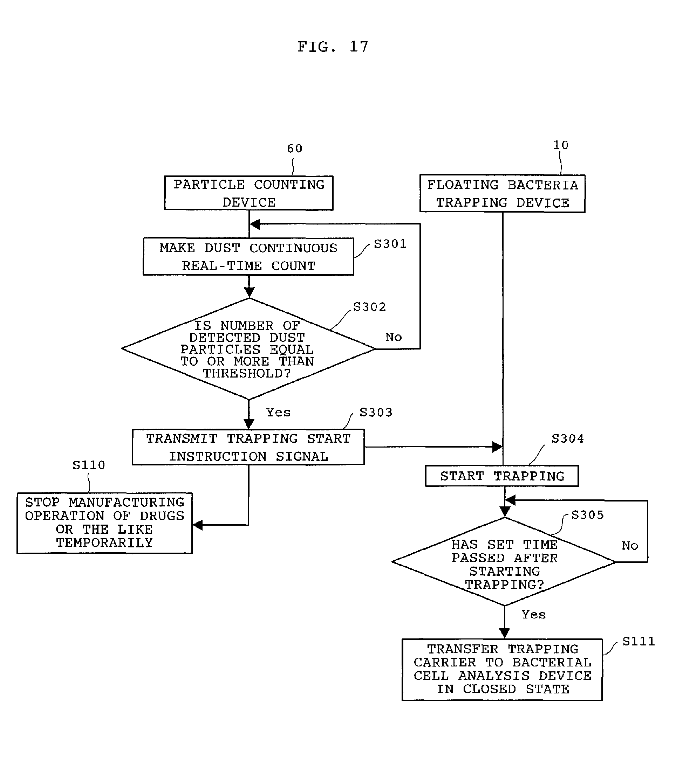

Next, the floating bacteria counting method according to the present embodiment will be described with reference to FIG. 17. While the trapping operation of the floating bacteria counting device 10 is stopped, the floating bacteria counting operator turns on the switch to start the counting operation of the particle counting device 60. Accordingly, the particle counting device 60 makes a continuous real-time count of dust in the germ-free isolator 50 (step S301). If the number of counted dust particles is equal to or more than a threshold (step S302: Yes), the trapping start instruction signal transmitting unit 65 transmits a trapping start instruction signal to the floating bacteria counting device 10 (step S303).

The particle counting device 60 outputs an alarm or the like and a drug manufacturing worker stops the manufacturing operation of drugs based on the output thereof (step S110).
When the floating bacteria counting device 10 receives the trapping start instruction signal from the particle counting device 60, the trapping start unit 103 starts a trapping operation of floating bacteria (step S304).

The trapping continuation unit 104 continues the trapping operation until the preset time passes after starting the trapping (step S305).
When the preset time passes, the floating bacteria counting operator transfers the trapping carrier 30 to the bacterial cell analysis device 80 in a closed state (step S111).

The processes after step S110 and step S111 are the same as in the first embodiment.
According to the present embodiment, useless trapping and time and efforts of analysis can be saved by a trapping operation by the floating bacteria counting device 10 being started after detection of dust by the particle counting device 60 so that only living organisms can be counted quickly and accurately.

The above embodiment is described by assuming that a trapping start instruction signal is transmitted to the floating bacteria counting device 10 when "35 particles in m³" of dust floating in the air are detected as the "threshold", but the "threshold" is not limited to the above example and can be set appropriately in accordance with cleanliness guaranteed for the germ-free isolator 50. According to JIS B9920, which is a standard for cleanliness, for example, the upper limit of concentration of dust per 1 m³ for Class 1 is 10/m³ for the particle size 0.1 µm of dust, 2/m³ for the particle size 0.2 µm, and 1/m³ for the particle size 0.3 µm. For Class 2, the upper limit is 10²/m³ for the particle size 0.1 µm of dust, 24/m³ for the particle size 0.2 µm, and 10/m³ for the particle size 0.3 µm. For Class 3, the upper limit is 10³/m³ for the particle size 0.1 µm of dust, 236/m³ for the particle size 0.2 µm, 101/m³ for the particle size 0.3 µm, and 35/m³ for the particle size 0.5 µm. For Class 4, the upper limit is 10⁴/m³ for the particle size 0.1 µm of dust, 2360/m³ for the particle size 0.2 µm, 1010/m³ for the particle size 0.3 µm, and 350/m³ for the particle size 0.5 µm. For Class 5, the upper limit is 10⁵/m³ for the particle size 0.1 µm of dust, 23600/m³ for the particle size 0.2 µm, 10100/m³ for the particle size 0.3 µm, 3500/m³ for the particle size 0.5 µm, and 29/m³ for the particle size 5 µm. For Class 6, the upper limit is 101000/m³ for the particle size 0.3 µm, 35000/m³ for the particle size 0.5 µm, and 290/m³ for the particle size 5 µm. For Class 7, the upper limit is 1010000/m³ for the particle size 0.3 µm, 350000/m³ for the particle size 0.5 µm, and 2900/m³ for the particle size 5 µm. For Class 8, the upper limit is 10100000/m³ for the particle size 0.3 µm, 3500000/m³ for the particle size 0.5 µm, and 29000/m³ for the particle size 5 µm. Class 1 to Class 2 is appropriate as the cleanliness class when the germ-free isolator 50 is used for a wafer process of semiconductor fabrication and Class 3 to Class 8 is appropriate when used for an industrial clean room of semiconductor fabrication. Class 3 or Class 4 is appropriate when used for biohazard recombinant DNA of biotechnology and Class 5 to Class 8 is appropriate when used for a bio-clean room. Class 5 or Class 6 is appropriate when used for a bio-clean operating room. Class 3 to Class 7 is appropriate when used for a drug production process for manufacturing drugs, antibiotics, or anticancer agents. In food manufacturing, Class 3 or Class 4 is appropriate when used for a retort pouch food processing process and Class 7 or Class 8 is appropriate when used for a fermentation process. In the present embodiment, the germ-free isolator 50 is used for manufacturing drugs and the "threshold" may be set so that a trapping start instruction signal is transmitted when, for example, "35 or more particles whose size is 0.5 µm or more per 1 m³" are detected. Depending on conditions of use of the germ-free isolator 50, the threshold can be set optionally to correspond to Class 1 to Class 8 described above. Similarly, the "preset time" can also be set appropriately in accordance with the set threshold.

### (Fourth embodiment)

Next, the fourth embodiment will be described. The first embodiment is different from the fourth embodiment in that while the filtration of the trapping carrier 30 is done by the bacterial cell analysis device 80 in the first embodiment, the filtration is done by the floating bacteria counting device 10 in the fourth embodiment.

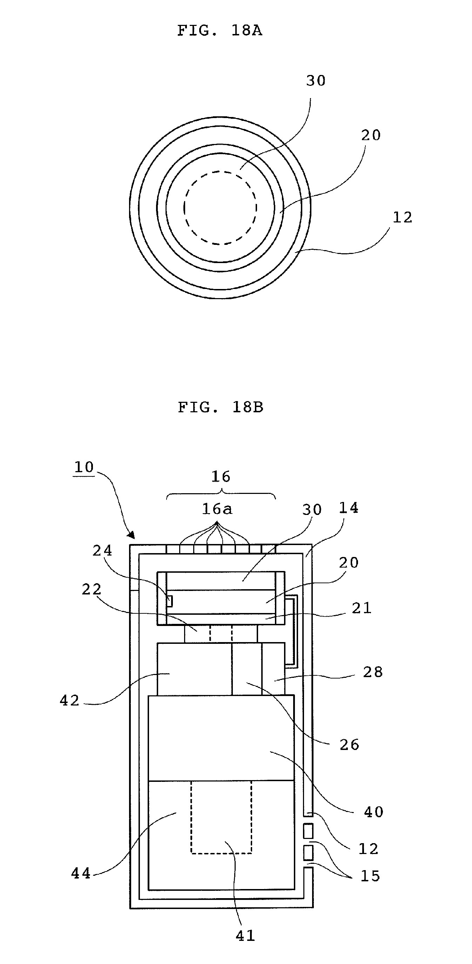

FIG. 18A is a diagram schematically showing the transverse section of an upper part of the floating bacteria counting device 10 according to the present embodiment and FIG. 18B is a diagram schematically showing the longitudinal section of the floating bacteria counting device 10. To describe a difference from the configuration in the first embodiment with reference to FIGS. 18A and 18B, the support container 20 in a columnar shape is filled with the trapping carrier 30 in a germ-free manner the bottom thereof is supported by a plate member in a meshed shape or doughnut shape. A heater 24 as a heating mechanism is provided inside the support container 20. The heater 24 is controlled so that the trapping carrier 30 is heated up to the phase transition temperature with precision. However, the heating mechanism of the trapping carrier 30 is not limited to the heater 24 and any mechanism capable of heating the trapping carrier 30 to the phase transition temperature may be used. For example, a jacket may be mounted around the trapping carrier 30 to cause warm water to flow or the air sucked in from the nozzle 16 may be heated.

A bottle 26 containing a diluent to dilute the trapping carrier 30 and an injection mechanism 28 to inject the diluent from the bottle 26 into the support container 20 are provided below the driving mechanism 22.

The bacterial cell analysis device 80 according to the present embodiment does not include the warm water supply unit 81, the heater 83, and the filtration unit 85 and includes the reagent dispensing unit 87, the luminescence counting unit 88, and the conversion unit 89.
Otherwise, the configuration is the same as in the first embodiment.

The floating bacteria counting device 10 configured as described above performs, like in the first embodiment, a trapping operation. After the trapping operation, the trapping carrier 30 is heated to the phase transition temperature of the trapping carrier 30 by the heater 24 of the support container 20. Accordingly, the trapping carrier 30 in the gel state makes a phase transition to the sol state and thus, floating bacteria captured by the trapping carrier 30 are contained in the trapping carrier 30 in the sol state.

The trapping carrier 30 in the sol state is filtrated by driving of a vacuum pump 42 and floating bacteria are captured by the filter 21. If the trapping carrier 30 of high polymer concentration is used, the solated trapping carrier 30 is diluted by a diluent in the bottle 26 being injected into the support container 20 by the injection mechanism 28 and then filtrated. Accordingly, processes until floating bacteria are recovered on the filter 21 can be performed inside the floating bacteria counting device 10.

The floating bacteria counting device 10 is provided with the heater 24, the injection mechanism 28 of the diluents, and the vacuum pump 42 in the present embodiment as described above and therefore, after the trapping operation, processes of solating the trapping carrier 30 and filtrating and removing the solated trapping carrier 30 by filtration to capture floating bacteria can be performed inside the floating bacteria counting device 10.

By analyzing captured floating bacteria by the bacterial cell analysis device 80, processes can appropriately divided between the floating bacteria counting device 10 and the bacterial cell analysis device 80 and therefore, time and efforts of work needed from floating bacteria trapping to analysis and consumption of reagents can be reduced.

In each of the above embodiments, it is assumed that the particle counting device 60 is installed inside the germ-free isolator 50, but if, for example, a suction tube (not shown) connected to the main body of the particle counting device 60 is arranged inside the germ-free isolator 50, the main body of the particle counting device 60 may be installed outside the germ-free isolator 50.

### Industrial Applicability

The present invention can be applied not only to a room in which drugs are manufactured, but also to floating bacteria count in a clean room of hospitals, operating rooms, food processing plants, semiconductor fabrication plants, and biotechnology.

### Reference Signs List

10: Floating bacteria counting device, 12: Casing, 14: Top cover, 15: Exhaust port, 16: Nozzle, 16a: Pinhole, 20: Support container, 22: Driving mechanism, 24: Heater, 26: Bottle, 28: Injection mechanism, 30: Trapping carrier, 40: Fan, 41: Fan driving motor, 42: Vacuum pump, 44: Filter medium, 50: Germ-free isolator, 60: Particle counting device, 61: Alarm output unit, 63: Counting state recording unit, 65: Trapping start instruction signal transmitting unit, 80: Bacterial cell analysis device, 81: Warm water supply unit, 83: Heater, 85: Filtration unit, 87: Reagent dispensing unit, 88: Luminescence counting unit, 89: Conversion unit, 101: Start signal transmitting unit, 102: Trapping state recording unit, 103: Trapping start unit, 104: Trapping continuation unit

## Claims

1. A floating bacteria trapping device having a nozzle allowing air the pass through, a trapping carrier provided downstream of the nozzle to catch floating bacteria in the air having passed through the nozzle, and a support container supporting the trapping carrier, comprising:
a driving mechanism that causes the support container to move in a horizontal direction so that trajectories drawn by center points of regions on the trapping carrier against which the air having passed through the nozzle collides do not intersect.

2. The floating bacteria trapping device according to claim 1, wherein the nozzle is formed of a plurality of pinholes arranged at equal intervals and
if a pitch interval between the pinholes is d, the driving mechanism causes the support container to move in the horizontal direction so that the support container draws a circle of less than d in diameter.

3. The floating bacteria trapping device according to claim 1 or 2, wherein the driving mechanism causes the support container to rise in a vertical direction.

4. A floating bacteria counting method of counting living organisms trapped by a trapping carrier by causing air to collide against the trapping carrier to trap floating bacteria and analyzing the trapping carrier, wherein
if floating bacteria are trapped by the trapping carrier mounted on a floating bacteria trapping device while replacing the trapping carrier mounted on the floating bacteria trapping device, the trapping carrier mounted on the floating bacteria trapping device when particles floating in the air are detected by a particle counting device that counts particles floating in the air in a room in which the floating bacteria trapping device is arranged is the trapping carrier to be analyzed.

5. A floating bacteria counting method of counting living organisms trapped by a trapping carrier by analyzing the trapping carrier mounted on a floating bacteria trapping device trapping floating bacteria in air while causing a support container supporting the trapping carrier to move in a horizontal direction so that trajectories drawn by center points of regions on the trapping carrier against which the air collides do not intersect, wherein
if floating bacteria are trapped by the trapping carrier mounted on the floating bacteria trapping device while replacing the trapping carrier mounted on the floating bacteria trapping device, the trapping carrier mounted on the floating bacteria trapping device when particles floating in the air are detected by a particle counting device that counts particles floating in the air in a room in which the floating bacteria trapping device is arranged is the trapping carrier to be analyzed.

6. The floating bacteria counting method according to claim 4 or 5, comprising:
a start signal transmitting step of transmitting a start signal from the floating bacteria trapping device to the particle counting device if the floating bacteria trapping device starts the trapping during a counting operation of the particle counting device; and
a recording step of recording a counting state by the particle counting device and recording a trapping state by the floating bacteria trapping device by associating with an elapsed time from a time when the start signal is transmitted.

7. The floating bacteria counting method according to claim 6, wherein in the recording step, the particle counting device records the number of counted particles by associating with the elapsed time and when the trapping carrier is replaced, the floating bacteria trapping device records the replacement by associating with the elapsed time.

8. The floating bacteria counting method according to claim 5, wherein if the particle counting device detects particles floating in the air, an alarm is output.

9. A floating bacteria counting method of counting living organisms trapped by a trapping carrier by analyzing the trapping carrier mounted on a floating bacteria trapping device trapping floating bacteria in air having passed through a nozzle while causing a support container supporting the trapping carrier to move in a horizontal direction so that trajectories drawn by center points of regions on the trapping carrier against which the air having passed through the nozzle collides do not intersect, comprising:
a trapping start signal transmitting step of transmitting a trapping start instruction signal to the floating bacteria trapping device when a particle counting device that counts particles floating in the air in a room in which the floating bacteria trapping device is arranged detects particles floating in the air equal to a threshold or more;
a trapping start step of starting trapping of floating bacteria in the air from a time when the floating bacteria trapping device receives the trapping start instruction signal; and
a living organism counting step of counting living organisms trapped by the trapping carrier by analyzing the trapping carrier when a preset time passes after the trapping is started.

10. A floating bacteria counting system that includes the floating bacteria trapping device and the particle counting device that counts particles floating in air in a room in which the floating bacteria trapping device is arranged according to any one of claims 1 to 3 and counts living organisms caught by a trapping carrier by trapping floating bacteria in the air by the trapping carrier mounted on the floating bacteria trapping device while replacing the trapping carrier mounted on the floating bacteria trapping device and analyzing the trapping carrier, wherein
the trapping carrier mounted on the floating bacteria trapping device when particles floating in the air are detected by the floating bacteria trapping device is the trapping carrier to be analyzed.

11. The floating bacteria counting system according to claim 10, wherein the floating bacteria trapping device includes:
a start signal transmitting unit that transmits a start signal to the particle counting device when trapping of floating bacteria in the air is started; and
a trapping state recording unit that records a trapping state by associating with an elapsed time from a time when the start signal is transmitted and
the particle counting device includes:
a counting state recording unit that records a counting state by associating with the elapsed time from the time when the start signal is received.

12. The floating bacteria counting system according to claim 11, wherein the counting state recording unit records the number of counted particles by associating with the elapsed time and
when the trapping carrier is replaced, the trapping state recording unit records the replacement by associating with the elapsed time.

13. The floating bacteria counting system according to claim 10, wherein the particle counting device includes:
an alarm output unit that outputs an alarm when particles floating in the air are detected.

14. A floating bacteria counting system that includes the floating bacteria trapping device and the particle counting device that counts particles floating in air in a room in which the floating bacteria trapping device is arranged according to any one of claims 1 to 3 and counts living organisms caught by a trapping carrier by trapping floating bacteria in the air by the trapping carrier mounted on the floating bacteria trapping device, wherein
the particle counting device includes:
a trapping start instruction signal transmitting unit that transmits a trapping start instruction signal to the floating bacteria trapping device when particles floating in the air equal to a threshold or more are detected and
the floating bacteria trapping device includes:
a trapping start unit that starts trapping of floating bacteria in the air when the trapping start instruction signal is received; and
a trapping continuation unit that that continues the trapping until a preset time passes after the trapping is started by the trapping start unit.
